# FASCICULE DE BREVET EUROPEEN

(11) **EP 1 383 628 B1**
(45) Date de publication et mention de la délivrance du brevet: **03.11.2004**
(21) Numéro de dépôt: 02706908.7
(22) Date de dépôt: 28.02.2002
(51) Int. Cl.: B23K 26/20, B23K 26/32

(54) **PROCEDE D'ASSEMBLAGE D'ELEMENTS PAR CHAUFFAGE LOCALISE**
VERFAHREN ZUM VERBINDEN VON BAUTEILEN DURCH EINE LOKALISIERTE ERWÄRMUNG
METHOD FOR ASSEMBLING ELEMENTS BY LOCALISED HEATING

(30) Priorité: 02.03.2001 FR 0102884
(43) Date de publication de la demande: 28.01.2004
(73) Titulaire: Commissariat A L'Energie Atomique, 75752 Paris 15ème (FR)
(72) Inventeur: BLANC, Henri, F-38000 GRENOBLE (FR)
(74) Mandataire: Poulin, Gérard
(86) Numéro de dépôt international: PCT/FR2002/000727
(87) Numéro de publication internationale: WO 2002/070188

(56) Documents cités:
- DE-A- 3 820 848
- GB-A- 2 074 070
- US-A- 4 634 832
- US-A- 4 866 242
- US-A- 5 009 689
- US-A- 6 049 054
- US-A- 6 163 011
- PATENT ABSTRACTS OF JAPAN vol. 2000, no. 14, 5 mars 2001 (2001-03-05) & JP 2000 313630 A (SHIN MEIWA IND CO LTD), 14 novembre 2000 (2000-11-14)
- PATENT ABSTRACTS OF JAPAN vol. 010, no. 378 (M-546), 17 décembre 1986 (1986-12-17) & JP 61 169183 A (NIPPON STEEL CORP), 30 juillet 1986 (1986-07-30)

## Description

### Domaine technique et art antérieur

La présente invention concerne un procédé d' assemblage selon le préambule de la revendication 1. Un tel procédé est décrit dans le document US 5 009 689 A.

Plus particulièrement, l'invention concerne un procédé d'assemblage par chauffage localisé d'au moins deux substrats de silicium sensiblement plans et de faibles épaisseurs. Les deux substrats de silicium peuvent être, par exemple, des plaques, des lames, des tranches, des films minces ou encore des couches minces.

L'invention s'applique, par exemple, au scellement de cavités et de jonctions mécaniques ou électriques situées à l'interface de deux substrats.

Selon l'art connu, l'assemblage d'éléments sensiblement plans s'effectue sans apport de matière ou avec apport de matière.

L'assemblage sans apport de matière peut être réalisé en mettant en contact deux surfaces polies après préparation chimique des surfaces puis chauffage pour consolidation. Les matériaux mis en contact peuvent être Si/Si, Si/SiO2, Si/métal, métal/métal. Ce type d'assemblage est connu de l'homme de l'art sous l'appellation "wafer bonding". Un autre type d'assemblage sans apport de matière est connu sous l'appellation d'assemblage de type anodique. Il s'agit alors d'établir la liaison entre deux matériaux réagissant à l'interface sous l'effet conjugué d'un champ électrique et de la température (par exemple, interface Si/verre Pyrex ou Al/verre Pyrex) .

L'assemblage avec apport de matière peut être un assemblage de type adhésif. Un intermédiaire adhésif, par exemple de la résine époxy, peut être localisé entre les éléments à assembler. Il peut s'agir également d'un assemblage de type métallique :
- apport d'un métal dont l'alliage avec les matériaux à assembler a un point de fusion moins élevé que celui du métal (ex. Si/métal/Si),
- hybridation de puces élémentaires sur substrat,
- fusion de métaux.

Les méthodes d'assemblage selon l'art antérieur présentent de nombreux inconvénients.

La préparation chimique des surfaces est ainsi prohibée pour l'assemblage de circuits déjà finalisés et donc fragiles. Il en est de même pour les méthodes qui nécessitent une montée en température des circuits. L'apport de matériaux intermédiaires est également un inconvénient.

### Exposé de l'invention

L'invention ne présente pas ces inconvénients.

En effet, l'invention concerne un procédé d'assemblage d'au moins deux substrats de silicium. Le procédé comprend :
- une étape de mise en contact d'au moins une face sensiblement plane d'un premier substrat de silicium avec une face sensiblement plane d'un deuxième substrat de silicium de façon à constituer une interface entre les premier et deuxième substrats, les premier et deuxième substrats étant sensiblement non transparents pour une longueur d'onde λ de rayonnement laser, et
- une étape d'illumination du premier substrat de silicium par un faisceau laser de longueur d'onde λ pour créer un chemin de fusion, selon l'axe du faisceau laser, dans l'épaisseur du premier substrat et dans tout ou partie de l'épaisseur du deuxième substrat.

Selon une caractéristique supplémentaire de l'invention, la création du chemin de fusion s'accompagne d'une diminution de résistance mécanique du silicium à l'interface entre le chemin de fusion et le reste des substrats de silicium et, de part et d'autre du chemin de fusion, d'un scellement direct, sur une distance finie, de l'interface entre les deux substrats de silicium.

Selon encore une autre caractéristique supplémentaire de l'invention, le faisceau laser de longueur d'onde λ se déplace à la surface du premier substrat de façon à créer une succession de chemins de fusion définissant un plan. Dans ce dernier cas, selon encore une autre caractéristique supplémentaire de l'invention, le procédé comprend une étape de découpe par clivage selon au moins un plan créé par une succession de chemins de fusion.

Selon encore une caractéristique supplémentaire de l'invention, le faisceau laser de longueur d'onde λ se déplace à la surface du premier substrat de façon à créer une succession de chemins de fusion définissant une surface non plane. Dans ce dernier cas, selon une caractéristique supplémentaire de l'invention, le procédé comprend une étape de découpe par gravure KOH selon au moins une surface non plane crée par une succession de chemins de fusion.

Selon une autre caractéristique supplémentaire de l'invention, le procédé comprend une étape pour faire le vide entre les deux faces des substrats de silicium qui sont mises en contact.

Selon encore une autre caractéristique supplémentaire de l'invention, le rayonnement laser est un rayonnement infrarouge de longueur d'onde λ sensiblement égale 1064 nm, de puissance moyenne sensiblement égale à 12 W et constitué d'impulsions dont la fréquence est sensiblement égale 3 kHz.

Les surfaces en contact à sceller présentent une très faible rugosité et une bonne planéité. En dehors des surfaces à sceller, les surfaces en regard peuvent être ouvragées et, en conséquence, distantes l'une de l'autre. C'est le cas, par exemple, des circuits fabriqués, en micro-technologie, selon la technologie des circuits intégrés.

Le procédé d'assemblage agit par scellement direct des substrats du fait de la qualité du contact présent à l'interface des substrats.

Avantageusement, les zones mises en contact selon le procédé de l'invention peuvent définir un chemin de clivage pour une découpe ultérieure.

Il est également possible de prolonger le procédé selon l'invention lui-même jusqu'à la découpe des circuits. Dans la même opération, il est alors possible, par exemple, d'assembler certains éléments et d'en découper d'autres.

Dans les deux cas, la découpe peut avantageusement s'effectuer sans les protections usuelles mises en oeuvre dans les procédés de découpe standard (projection d'eau, projection de particules, retournement du circuit, etc.).

### Brève description des figures

D'autres caractéristiques et avantages de l'invention apparaîtront à la lecture d'un mode de réalisation de l'invention fait en référence aux figures jointes parmi lesquelles :
- la figure 1 représente un montage pour assembler deux éléments plans de faible épaisseur selon l'invention ;
- la figure 2 représente l'action d'un rayonnement laser de longueur d'onde λ sur un élément plan de faible épaisseur non transparent à une longueur d'onde λ ;
- la figure 3 représente un exemple de structure assemblée selon l'invention ;
- la figure 4 représente l'action d'un faisceau laser pour l'assemblage d'une structure selon la figure 3 ;
- la figure 5 représente la répartition en énergie d'un faisceau laser utilisé pour réaliser un assemblage tel que représenté en figure 3 ;
- la figure 6 représente la répartition des températures dans un cordon de silicium soumis à un faisceau laser dont l'énergie est répartie comme représenté en figure 5 ;
- la figure 7 représente la répartition de la résistance mécanique d'un cordon de silicium amorphe selon l'invention.

Sur toutes les figures, les mêmes repères désignent les mêmes éléments.

### Description détaillée de modes de mise en oeuvre de l'invention

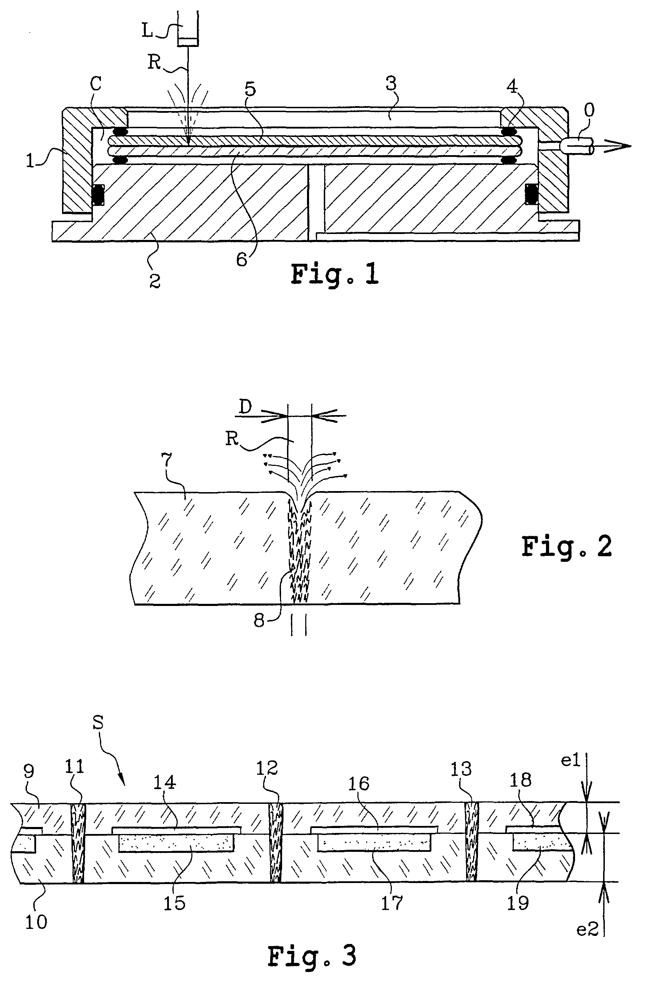

La figure 1 représente un montage pour assembler deux éléments plans de faible épaisseur selon l'invention.

Deux éléments plans de faible épaisseur 5 et 6, par exemple deux plaques en silicium ou un substrat supportant une couche mince en regard d'une autre plaque ou d'une autre couche mince supportée par un autre substrat, sont placés à l'intérieur d'une cavité C et mis en contact l'un avec l'autre. La cavité C est définie par l'espace formé entre un support 2 et un capot 1. Un orifice O relié à une pompe à vide (non représentée sur la figure) permet de faire le vide dans la cavité C et, partant, entre les deux faces à solidariser. Des joints 4 permettent d'isoler le volume compris entre les deux surfaces pour y faire le vide afin que les deux surfaces entrent parfaitement en contact.

Dans le cas de substrats indéformables, les surfaces devront présenter une planéité quasi-parfaite.

Dans le cas d'au moins un substrat mince, donc déformable, une planéité à courte distance sera suffisante. Un défaut de planéité à longue distance pourra être compensé par une déformation du substrat mince. Le capot 1 comprend une ouverture la plus large possible 3 pour un rayonnement R de longueur d'onde λ issu d'un laser L. Le rayonnement R peut alors atteindre l'élément 5. Le laser L est, par exemple, un laser YAG de puissance à impulsions émettant dans l'infrarouge. A titre d'exemple non limitatif, pour deux plaques de silicium de 450 µm d'épaisseur, la longueur d'onde λ du rayonnement est égale à 1064nm, la puissance moyenne est égale à 12W et la fréquence des impulsions est égale à 3kHz. Le rayonnement laser peut être réglé, par exemple, pour obtenir un faisceau de diamètre compris entre 30 et 50µm. La puissance moyenne en surface de l'élément 5 peut alors être égale à 8 ou 9 W.

La puissance absorbée par le silicium aux fréquences de l'infrarouge est faible. Il en résulte une fusion du silicium avec très peu de matière éjectée là ou le faisceau laser traverse les éléments 5 et 6. Il y a alors amorphisation du silicium sur toute l'épaisseur traversée.

La figure 2 représente l'action d'un rayonnement R de diamètre D sur une couche mince de silicium 7. De la matière est éjectée sur une très faible profondeur alors qu'un cordon de silicium amorphe 8 est formé sur le trajet du faisceau. Pour former le cordon de silicium amorphe, la vitesse de déplacement du faisceau laser à la surface de la couche de silicium peur être comprise, par exemple, entre 0,5mm/s et 2mm/s.

La figure 3 représente un exemple de structure assemblée selon l'invention.

La structure S comprend deux substrats de silicium 9 et 10 fixés l'un à l'autre par trois cordons 11, 12, 13 de silicium amorphe. L'épaisseur e1 du substrat 9 est par exemple égale à 300µm et l'épaisseur e2 du substrat 10 par exemple égale à 500µm. Avantageusement, une partie seulement des cordons de silicium amorphe fixe les substrats l'un à l'autre. Comme cela apparaîtra dans la suite de description, la fixation des substrats s'effectue principalement par des zones situées de part et d'autre du chemin de fusion.

La structure S constitue, par exemple, un capteur sismique. Le substrat 10 comprend alors un ensemble de zones actives ou capteurs 15, 17, 19. Des cavités 14, 16, 18 sont formées au-dessus des capteurs respectifs 15, 17, 19. Le substrat 9 est un capot destiné à protéger les capteurs des chocs et de la poussière et qui permet une reprise de contacts électriques au travers d'ouvertures (non représentées sur la figure).

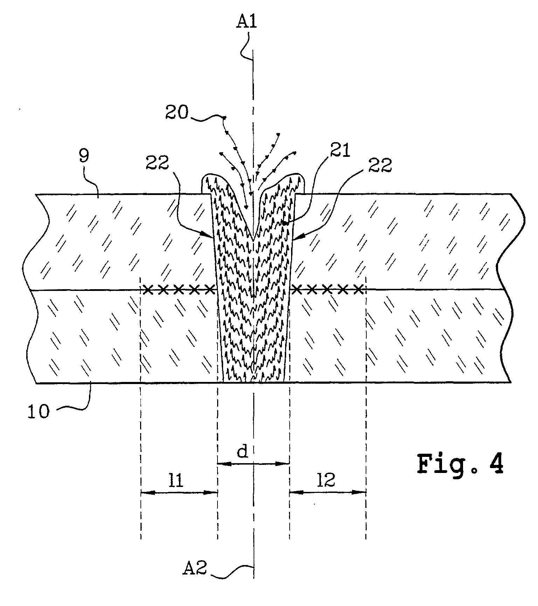

La figure 4 représente l'action d'un faisceau laser pour l'assemblage d'une structure selon la figure 3 et les figures 5 et 6 représentent, respectivement, la courbe de répartition d'énergie du faisceau laser et la courbe de répartition des températures dans un cordon de silicium, lors de l'assemblage de la structure selon la figure 3.

Comme cela a été mentionné précédemment, la puissance absorbée par le silicium aux fréquences de l'infrarouge est faible. Il en résulte que très peu de matière 20 est éjectée lorsque le faisceau laser traverse, successivement, les substrats de silicium 9 et 10.

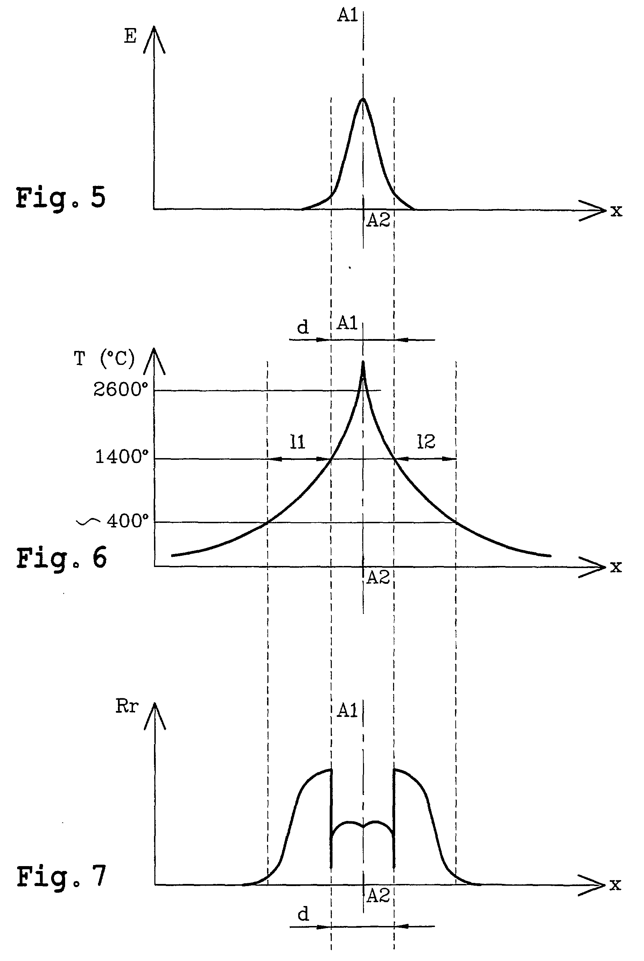

Une zone de silicium fondu 21 apparaît, sur une largeur d, dans le silicium. La largeur d, par exemple égale à 40µm, correspond sensiblement à la largeur du faisceau laser pour laquelle l'énergie E du faisceau est maximale (cf. figure 5). Dans le silicium fondu sous l'action du faisceau laser, la température varie de sensiblement 2600°C au niveau de l'axe A1-A2 du faisceau laser à sensiblement 1400°C à une distance d/2 de l'axe A1-A2 (cf. figure 6). L'ébullition du silicium au centre de la zone fondue 21 conduit avantageusement à une certaine porosité de cette zone. Une interface 22 apparaît entre la zone fondue 21 et le silicium non fondu et monocristallin des substrats 9 et 10 situé au-delà de la zone fondue (transition nette entre phase liquide et phase solide).

De part et d'autre de la zone 21 de largeur d, en s'éloignant de l'axe A1-A2 du faisceau, les températures dans le silicium décroissent rapidement, par exemple de sensiblement 1400°C à sensiblement 400°C. Ces températures sont cependant suffisantes pour permettre une jonction entre les substrats 9 et 10 par scellement direct entre les deux substrats. Cette jonction par scellement direct s'effectue, de part et d'autre de la zone 21, sur les distances finies respectives 11 et 12.

Après la réalisation des cordons 11, 12, 13 de silicium amorphe comme indiqué ci-dessus, la structure assemblée de la figure 3 reste avantageusement intègre, c'est-à-dire manipulable sans risque de fractionnement. Il est alors possible de poursuivre différents types d'étapes technologiques qui n'induisent pas de forte contrainte mécanique. Il est également possible d'effectuer une découpe de la structure selon les interfaces 22.

Comme cela apparaît sur la figure 7, la résistance mécanique qui unit les substrats 9 et 10 est faible selon les interfaces 22 et relativement élevée dans les zones de largeurs 11 et 12 situées au-delà du cordon de fusion.

Une découpe par clivage selon les interfaces est possible lorsque les interfaces 22 définissent des plans de clivage. Lorsque les interfaces 22 ne sont pas plans, par exemple lorsqu'ils définissent des courbes fermées, la découpe peut être effectuée par gravure KOH (KOH pour « hydroxyde de potassium »). Avantageusement, une gravure KOH de quelques minutes peut suffire pour dissoudre un cordon de silicium amorphe de 30µm de largeur sur 500µm de profondeur tel qu'un cordon selon l'invention (à titre de comparaison, plusieurs heures sont nécessaires pour dissoudre une épaisseur de silicium non préparée de même épaisseur).

La gravure KOH peut également être écourtée en préparant le substrat de la manière suivante : immersion dans l'isopropanol, puis dans l'éthanol, puis dans l'eau déionisée, puis, enfin, dans le KOH. La gravure KOH peut également être assistée par des ultrasons.

## Revendications

1. Procédé d'assemblage d'au moins deux substrats de silicium (9, 10), **caractérisé en ce qu'**il comprend :
- une étape de mise en contact d'au moins une face sensiblement plane d'un premier substrat de silicium (9) avec une face sensiblement plane d'un deuxième substrat de silicium (10) de façon à constituer une interface entre les premier et deuxième substrats, les premier et deuxième substrats (9, 10) étant sensiblement non transparents pour une longueur d'onde λ de rayonnement laser (R), et
- une étape d'illumination du premier substrat de silicium (9) par un faisceau laser de longueur d'onde λ, pour créer un chemin de fusion (21), selon l'axe (A1-A2) du faisceau laser, dans la totalité de l'épaisseur du premier substrat (9) et dans tout ou partie de l'épaisseur du deuxième substrat (10).

2. Procédé selon la revendication 1, **caractérisé en ce que** la création du chemin de fusion s'accompagne d'une diminution de la résistance mécanique du silicium à l'interface (22) entre le chemin de fusion (21) et le reste des substrats de silicium et, de part et d'autre du chemin de fusion (21), sur une distance finie, d'un scellement direct de l'interface des deux substrats de silicium.

3. Procédé selon les revendications 1 ou 2, **caractérisé en que** le faisceau laser de longueur d'onde λ se déplace à la surface du premier substrat (5) de façon à créer une succession de chemins de fusion définissant un plan.

4. Procédé selon la revendication 3, **caractérisé en ce qu'**il comprend une étape de découpe par clivage selon au moins un plan créé par une succession de chemins de fusion.

5. Procédé selon les revendications 1 ou 2, **caractérisé en que** le faisceau laser de longueur d'onde λ se déplace à la surface du premier substrat (9) de façon à créer une succession de chemins de fusion définissant une surface non plane.

6. Procédé selon la revendication 5, **caractérisé en ce qu'**il comprend une étape de découpe par gravure KOH selon au moins une surface non plane créée par une succession de chemins de fusion.

7. Procédé selon l'une quelconque des revendications précédentes, **caractérisé en ce qu'**il comprend une étape pour faire le vide entre les deux faces des substrats de silicium qui constituent l'interface.

8. Procédé selon l'une quelconque des revendications précédentes, **caractérisé en ce que** le rayonnement laser (R) est un rayonnement infrarouge de longueur d'onde λ sensiblement égale 1064 nm, de puissance moyenne sensiblement égale à 12 W et constitué d'impulsions dont la fréquence est sensiblement égale 3 kHz.

## Patentansprüche

1. Verfahren zum Verbinden von wenigstens zwei Siliciumsubstraten (9, 10), **dadurch gekennzeichnet, dass** es umfasst:
- einen Schritt zur Herstellung eines Kontakts zwischen wenigstens einer im Wesentlichen ebenen Fläche eines ersten Siliciumsubstrats (9) und einer im Wesentlichen ebenen Fläche eines zweiten Siliciumsubstrats (10), um zwischen dem ersten und dem zweiten Substrat eine Grenzfläche zu bilden, wobei das erste und das zweite Substrat (9, 10) im Wesentlichen nicht durchlässig sind für eine Laserstrahlung (R) der Wellenlänge λ, und
- einen Schritt zur Beleuchtung des ersten Siliciumsubstrats (9) mit einer Laserstrahlung der Wellenlänge λ, um entsprechend der Achse (A1-A2) der Laserstrahlung einen Schmelzweg (21) zu erzeugen, der die Gesamtheit der Dicke des ersten Substrats (9) und die Gesamtheit oder einen Teil der Dicke des zweiten Substrats (10) durchquert.

2. Verfahren nach Anspruch 1, **dadurch gekennzeichnet, dass** die Erzeugung des Schmelzwegs begleitet wird von einer Abnahme der mechanischen Festigkeit des Siliciums an der Grenzfläche (22) zwischen dem Schmelzweg (21) und dem Rest des Siliciumsubstrats und - beiderseits des Schmelzwegs (21), über eine begrenzte Distanz - von einer direkten Verschmelzung der Grenzfläche der beiden Siliciumsubstrate.

3. Verfahren nach Anspruch 1 oder 2, **dadurch gekennzeichnet, dass** sich die Laserstrahlung mit der Wellenlänge λ an der Oberfläche des ersten Substrats (5) so verschiebt, dass sie eine Folge von eine Ebene definierenden Schmelzwegen erzeugt.

4. Verfahren nach Anspruch 3, **dadurch gekennzeichnet, dass** es einen Zerlegungsschritt durch Spaltung gemäß wenigstens einer durch eine Folge von Schmelzwegen definierten Ebene umfasst.

5. Verfahren nach den Ansprüchen 1 oder 2, **dadurch gekennzeichnet, dass** sich die Laserstrahlung mit der Wellenlänge λ an der Oberfläche des ersten Substrats (9) so verschiebt, dass sie eine Folge von Schmelzwegen erzeugt, die eine unebene Fläche definieren.

6. Verfahren nach Anspruch 5, **dadurch gekennzeichnet, dass** es einen Zerlegungsschritt durch KOH-Ätzung gemäß wenigstens einer durch eine Folge von Schmelzwegen definierten unebenen Fläche umfasst.

7. Verfahren nach einem der vorangehenden Ansprüche, **dadurch gekennzeichnet, dass** es einen Schritt zur Vakuumerzeugung zwischen den beiden Flächen der Siliciumsubstrate umfasst, welche die Grenzfläche bilden.

8. Verfahren nach einem der vorangehenden Ansprüche, **dadurch gekennzeichnet, dass** die Laserstrahlung (R) eine IR-Strahlung mit einer Wellenlänge λ von im Wesentlichen gleich 1064 nm und einer mittleren Leistung von im Wesentlichen gleich 12 W ist und durch Impulse gebildet wird, deren Frequenz im Wesentlichen 3 kHz beträgt.

## Claims

1. Method of assembly of at least two silicon substrates (9, 10), **characterized in that** it comprises:
- a step of placing in contact at least one substantially planar face of a first silicon substrate (9) with a substantially planar face of a second silicon substrate (10) so as to constitute an interface between the first and second substrates, the first and second substrates (9, 10) being substantially non-transparent for a wavelength λ of laser radiation (R), and
- a step of illuminating the first silicon substrate (9) by a laser beam of wavelength λ to create a fusion path (21), along the laser beam axis (A1-A2), in the entire thickness of the first substrate (9) and in all or part of the thickness of the second substrate (10).

2. Method according to claim 1, **characterized in that** the creation of the fusion path is accompanied by a reduction in mechanical strength of the silicon at the interface (22) between the fusion path (21) and the remainder of the silicon substrates and, on both sides of the fusion path (21), over a finite distance, a direct sealing of the interface between the two silicon substrates.

3. Method according to claims 1 or 2, **characterized in that** the laser beam of wavelength λ is displaced over the surface of the first substrate (9) so as to create successive fusion paths defining a plane.

4. Method according to claim 3, **characterized in that** it comprises a step of cutting by cleavage along at least one plane created by successive fusion paths.

5. Method according to claims 1 or 2, **characterized in that** the laser beam of wavelength λ is displaced over the surface of the first substrate (9) so as to create successive fusion paths defining a non-planar surface.

6. Method according to claim 5, **characterized in that** it comprises a step of cutting by KOH etching along at least one non-planar surface created by successive fusion paths.

7. Method according to any one of the foregoing claims, **characterized in that** it comprises a step of forming a vacuum between the two faces of the silicon substrates which constitute the interface.

8. Method according to any one of the foregoing claims, **characterized in that** the laser radiation (R) is infrared radiation of wavelength λ substantially equal to 1064 nm, of average power substantially equal to 12 W, and constituted by pulses of frequency substantially equal to 3 kHz.
